# EUROPEAN PATENT SPECIFICATION

(11) **EP 2 109 335 B1**
(45) Date of publication and mention of the grant of the patent: **02.11.2011**
(21) Application number: 08715316.9
(22) Date of filing: 25.03.2008
(51) Int. Cl.: H04M 3/42, H04Q 3/00

(54) **PERFORMING METHOD, DEVICE AND SYSTEM OF SERVICE OPEN INSTRUCTIONS**
VERFAHREN, VORRICHTUNG UND SYSTEM ZUR VERWALTUNG VON DIENSTANFORDERUNGSINSTRUKTIONEN
PROCÉDÉ, DISPOSITIF ET SYSTÈME DE GESTION D'INSTRUCTIONS DE MISE EN OPÉRATION DE SERVICE

(30) Priority: 03.08.2007 CN 200710075566
(43) Date of publication of application: 14.10.2009
(73) Proprietor: Huawei Technologies Co., Ltd., Longgang District, Shenzhen Guangdong 518129 (CN)
(72) Inventor: SUN, Wei, Shenzhen, Guangdong 518129 (CN)
(74) Representative: Körber, Martin Hans
(86) International application number: PCT/CN2008/070580
(87) International publication number: WO 2009/018727

(56) References cited:
- WO-A1-98/41002
- WO-A1-2003/103188
- CN-A- 1 588 949
- CN-A- 1 845 495
- RUF L ET AL: "Specification of Network Services and Mapping Algorithms" MILITARY COMMUNICATIONS CONFERENCE, 2006. MILCOM 2006, IEEE, PI, 23 October 2006 (2006-10-23), pages 1-7, XP031331736 ISBN: 978-1-4244-0617-3

## Description

### Field of the Invention

The present invention relates to communication field, particularly to a method, device and system for executing service provisioning instruction.

### Background of the Invention

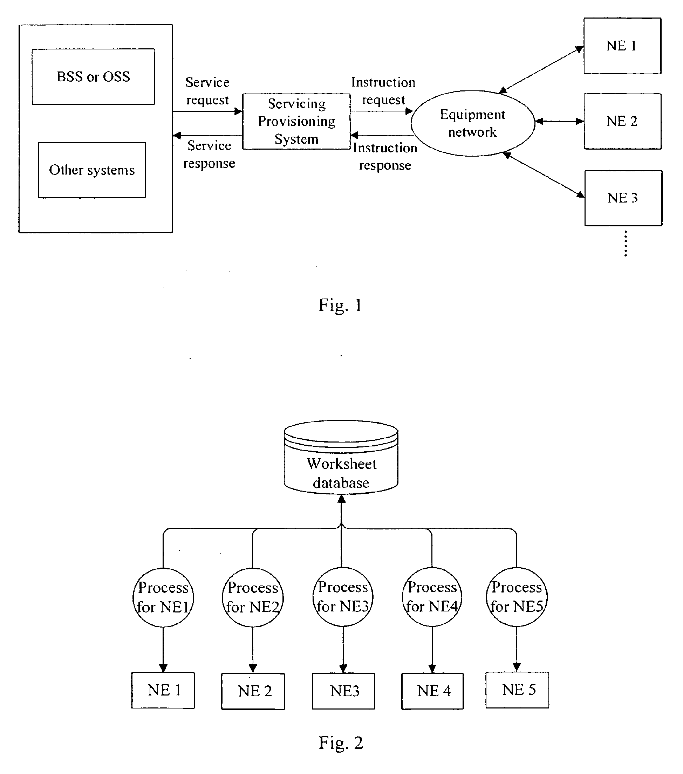

In order to provide services, a Business Support System, BSS e.g., Customer Relationship Management, CRM system, Custom Care system and Billing System, or the Operation Support System, OSS needs to have interfaces to Network Elements, NEs at the network side, e.g., Home Location Register, HLR or Authentication Center, AuC, Wireless Intelligent Network, WIN, Mobile Data Service Platform, MDSP, Short Message Service Center, SMSC, Voice Mail System, VMS, Multimedia Messaging Service Center, MMSC, Unified Messaging, UM, System, Next Generation Network, NGN, Public Switched Telephone Network, PSTN, so as to carry out service provisioning. As shown in Figure 1, the Service Provisioning System is equivalent to an interface between BSS or OSS and NE, and is also referred to as an online instruction system, which receives service requests from BSS or OSS, sends instruction requests through the equipment network to the NEs, receives instruction responses from the NEs, and returns service responses to the BSS or OSS. An example can be found in : WO98/41002.

In the case of existing service provisioning interfaces, usually each NE interface is provided with a separate program or process, the interfaces are independent to each other, and each interface has a separate internal processing logic. As shown in Figure 2, a worksheet database stores all service requests and instructions to be sent, an NE process retrieves an instruction to be sent from the worksheet database, sends the instruction to the NE, and writes back the final execution result of the NE to the worksheet database. Each NE process interacts with the worksheet database directly and retrieves the instruction to be sent periodically, and therefore occupies some connection resource of the worksheet database.

In the above solution, the time consumption required to send an instruction includes four parts.

A. Time interval between instruction retrieving operations: The NE process scans the worksheet table and retrieves instructions to be sent in a certain time interval.

B. Time required for retrieving an instruction: The NE process accesses the worksheet database to retrieve the instruction and at the same time for retrieving the instruction some preprocessing work may be required.

C. Time for sending an instruction, waiting for response and implementing parsing: After obtaining an instruction, the NE process sends the instruction to a corresponding NE, waits for the response from the NE, and parses the response message after obtaining the response.

D. Time required for writing back the instruction execution result: The NE process writes back the instruction execution result to the worksheet database.

When the NE process accesses the worksheet database to retrieve an instruction, it can retrieve each time a single instruction to be sent or retrieve each time a batch of instructions to be sent. Retrieving a single instruction each time is for the demand for support to complex service logics, such as logics of priority, roll-back, failure omitting, parallel processing and serial processing, in which the execution of an instruction is associated with the execution of another instruction. Retrieving a batch of instructions to be sent each time is usually used in the case that there is no complex logic and only whether the instructions are successful or not is concerned. If a plurality of connections to the same NE are required to be supported, a division is usually carried out with a fixed algorithm (e.g., allocated in number segment or others) when the worksheets are inserted into the worksheet database, so as to allocate the instructions to different connections. However, usually it is difficult to take account of the busy/idle state of a connection into the allocation algorithm to carry out dynamic allocation reasonably.

In the existing solution, interaction is carried out at a high frequency on the worksheet database interface, respective NEs need to interact with the worksheet database, which occupies some resource of the worksheet database. Frequent access causes degraded performance of the worksheet database and affects the overall performance of the system. In addition, because the retrieving, processing, and back-writing of all instructions is overly dependent on the worksheet database, excessive accesses to the worksheet database degrades the overall processing efficacy of individual instruction and batch instructions.

### Summary of the Invention

The object of the present invention is to provide a method for executing service provisioning instructions, so as to solve the existing problem of degraded performance of the worksheet database and degraded instruction processing performance because Network Elements NEs, are respectively connected to the worksheet database through a separate process.

A method for executing service provisioning instructions provided in the present invention includes: retrieving at least two instructions to be sent; inserting instructions having the same dependency characteristic into a corresponding memory instruction queue, according to the service logic relationship among the instructions; and allocating an instruction to be executed currently by an NE in the memory instruction queue to the corresponding connection of the NE.

A service provisioning device provided in the present invention includes:an instruction retrieving and writing back buffer unit adapted to retrieve at least two instructions to be sent;an instruction queue management unit adapted to insert instructions having the same dependency characteristic into a corresponding memory instruction queue, according to the service logical relationship among instructions, and an NE instruction distributing unit adapted to allocate the instruction to be executed currently by an NE in the memory instruction queue to the corresponding connection of the NE.

A service provisioning system provided in the present invention includes: a worksheet database adapted to store instructions to be sent; an instruction retrieving and writing back buffer unit adapted to retrieve at least two instructions to be sent in the worksheet database; an instruction queue management unit adapted to insert instructions which are to be sent, with the same dependency characteristic into a corresponding memory instruction queue, according to the service logical relationship among instructions; and an NE instruction distributing unit adapted to allocate the instruction to be executed currently by an NE in the memory instruction queue to the corresponding connection of the NE.

In the embodiment of the present invention, the instructions to be sent in the worksheet database are retrieved in uniform and are fast forwarded to the corresponding connections of the NE via the memory instruction queue for executing, and then the instruction execution result is written back to the worksheet database; therefore, it is helpful to reduce occupation of the resource of the worksheet database and improve instruction processing efficacy.

### Brief Description of the Drawings

Figure 1 is a schematic diagram illustrating the location of a service provisioning system in a network in the prior art;

Figure 2 is a schematic diagram illustrating the principle of instruction processing in service provisioning in the prior art;

Figure 3 is a structural representation of a binary tree of instructions in an example according to an embodiment of the present invention;

Figure 4 is a flow chart illustrating the implementation of a method for executing service provisioning instruction according to an embodiment of the present invention;

Figure 5 is a structural diagram of a service provisioning system according to an embodiment of the present invention;

Figure 6 is a structural diagram of a queue managing unit in the service provisioning system according to an embodiment of the present invention;

Figure 7 is a structural diagram of an instruction distributing unit in the service provisioning system according to an embodiment of the present invention; and

Figure 8 is a schematic diagram of executing an instruction string in a memory instruction queue in an NE according to an embodiment of the present invention.

### Detailed Description of the Embodiments

In order to make the object, technical solution and advantages of the present invention understood better, hereunder the present invention is described in detail with reference to the embodiments and the accompanying drawings. It should be understood that the embodiments described here are only for illustrating the present invention instead of constituting any limitation to the present invention.

In the embodiment of the present invention, the instructions to be sent in the worksheet database are retrieved and are fast forwarded to the corresponding Network Element, connections of the NE via the memory instruction queue for executing, and then the instruction execution result is written back to the worksheet database; therefore, it is helpful to reduce occupation of the resource of the worksheet database, improve instruction processing efficacy and support various complex service logics.

In an embodiment of the present invention, multiple worksheet batches of instructions may be stored in the worksheet database, and different worksheet batches are identified by worksheet BATCH IDs. A worksheet batch may include a plurality of worksheets, such as provisioning of general account, provisioning of short message service, SMS and provisioning of General Packet Radio Service, GPRS. The plurality of worksheets in a worksheet batch usually has a certain business relation, for example, if the provisioning of account fails, the subsequent worksheets will not be executed. In a worksheet batch, the sequence of each worksheet is identified by an internal sequence number, SEQ in the worksheet batch; and if only one worksheet exists in a worksheet batch, the SEQ of the worksheet may be "1".

A worksheet may include a plurality of instructions to be executed by different NEs, and the instructions may be executed by the NEs in a sequence of parallel execution and serial execution. In an embodiment of the present invention, the execution sequences of instructions to be executed by different NEs in the same worksheet are identified by the NE execution sequence number, NESEQ, for example, if both the NESEQ for NE1 and the NESEQ for NE2 are "1", it is indicated that the instructions for the NE1 and NE2 in the worksheet may be sent in parallel; and if the NESEQ for NE1 is "1" and the NESEQ2 for NE2 is "2", it is indicated that the instruction for NE2 may be sent only after the instruction for NE1 is sent. If the instructions need to be sent to only one NE by a worksheet, the NESEQ corresponding to the NE may be "1".

Even in the case that a worksheet corresponds to a single NE, several instructions may need to be sent to accomplish a service. For example, for some NEs, to provide Short Message Service, SMS, two instructions, i.e., Mobile Terminal, MT SMS and Mobile Originated, MO SMS, have to be sent. Parallel or serial execution may exist among different instructions for the same NE. In an embodiment of the present invention, the sequence of parallel and serial execution of different instructions for the same NE in a worksheet is identified by internal instruction sequence numbers, CMDSEQ of the NE. For example, if there is no dependency, limitation, or serial execution relationship between instruction A and instruction B and therefore instruction A and instruction B may be sent in parallel, the CMDSEQs of instruction A and instruction B may be the same; and if instruction A needs to be sent before the transmission of instruction B, the CMDSEQ of instruction A may be "1", and the CMDSEQ of instruction B may be "2". If there is only one instruction in the case that a worksheet corresponds to a single NE, the CMDSEQ of the instruction may be "1".

In an embodiment of the present invention, whether an instruction may be executed currently or not is identified by the number of adjacent instructions (COUNT) that need to be executed before the execution of this instruction. If the COUNT for an instruction is 0, it is indicated that this instruction may be executed currently; if the COUNT for an instruction is "1", it is indicated that one adjacent instruction to be executed before this instruction exists; if the COUNT for an instruction is "2", it is indicated that two adjacent instructions to be executed before the instruction exist; if there is parallel relationship between the two instructions, the two instructions may be sent in parallel.

In an embodiment of the present invention, for instructions having the same dependency characteristic, e.g., the same BATCH ID, the same International Mobile Subscriber Identification Number, IMSI, or the same Mobile Station International ISDN, MSISDN, the data structure is a meshed binary tree, and each node in the tree has two successor nodes, i.e., a parallel instruction node and a serial instruction node. The serial instruction nodes for a plurality of nodes are identical, for example, instructions A, B, C, and D may be executed in parallel while instruction E has to be executed after the instructions A, B, C, and D are executed, then the serial instruction node for instructions A, B, C, and D is instruction E. The parallel instruction node corresponding to instruction A is instruction B, the parallel instruction node corresponding to instruction B is instruction C, and the parallel instruction node corresponding to instruction C is instruction D. Therefore, in the binary tree structure of instructions, the COUNT value is the number of parent instruction nodes that have direct serial limitation relationship with the current node.

Hereunder the binary tree structure of instructions is described in an example. Assuming that user A requests to be provided with two batches of services, and the corresponding BATCH IDs of the two batches are BATCH1 and BATCH2. BATCH1 is for provisioning of general accounts, while BATCH2 is for provisioning of GPRS networking service. BATCH1 has two worksheets SEQ and SEQ2, with SEQ values as "1" and "2". BATCH2 has one worksheet SEQ1, with SEQ value as "1".

In BATCH 1, worksheet SEQ1 needs to send instructions to three NEs, i.e., NE1, NE2, and NE3. For NE1 and NE2, the instructions may be sent in parallel, and after the instructions are sent to NE1 and NE2, other instructions may be sent to NE3 serially. Therefore, the NESEQs for NE1, NE2, and NE3 are "1", "1", and "2". The instructions to be sent to NE2 include two instructions A and B which need to be sent serially, i.e., instruction B may be sent only after instruction A is sent; therefore, the CMDSEQs for instructions A and B are "1" and "2". Only instruction C is to be sent to NE1, and the CMDSEQ corresponding to instruction C is "1". Only instruction D is to be sent to NE3, and the CMDSEQ corresponding to instruction D is "1". Because there is no instruction to be executed before instruction A, the COUNT value of instruction A is "0", which also indicates that instruction A may be sent immediately. Because instruction B may be executed only after instruction A is executed, the COUNT value of instruction B is "1". Instruction D may be executed only after instructions A, B, and C are executed. But only instructions B and C have adjacency relationship with instruction D and instructions B and C may be executed in parallel, so the COUNT value of instruction D is "2". After instruction B is executed, the COUNT value of instruction D is decreased by 1; and after instruction C is executed, the COUNT value of instruction D is decreased by 1. Therefore, after both instructions are executed, the COUNT value of instruction D is "0", which indicates that instruction D may be sent to the NE directly now.

Worksheet SEQ2 needs to send instructions to NE1, NE2, and NE3 in parallel; therefore, the corresponding NESEQ are "1", "1", and "1". Instruction E corresponds to NE1, instructions F and G correspond to NE2 and are to be sent in parallel, and instruction H corresponds to NE3. Therefore, the CMDSEQs corresponding to instruction E, F, G, and H are "1", "1", "1", and "1", respectively. Because instructions E, F, G, and H may be sent only after instruction D is executed, the COUNT values corresponding to instructions E, F, G, and H are "1", "1", "1", and "1", respectively.

In BATCH2, worksheet SEQ1 needs to send instructions to three NEs of NE1, NE2, and NE3. The instructions are sent to NE1 and NE2 in parallel, and after that other instructions may be sent to NE3 serially. Therefore, the NESEQs corresponding to NE1, NE2, and NE3 are "1", "1", and "2", respectively. There are two instructions I and J for NE2 and the two instructions are to be sent serially, i.e., instruction J may be sent only after instruction I is sent; therefore, the CMDSEQs for instructions I and J are "1" and "2", respectively. There is one instruction K for NE1 and the CMDSEQ of instruction K is 1, which indicates that instruction K may be executed with instruction I in parallel. There is one instruction L for NE3 and the CMDSEQ of instruction L is 1, which indicates that instruction L may be executed only after instructions J and K are executed. For instructions I and K, because there are instructions E, F, G, and H to be sent before them, the COUNT values of instructions I and K are "4" respectively. Because there is instruction I to be sent before instruction J, the COUNT value of instruction J is "1". Because there are instruction J and K to be sent before instruction L, the COUNT value of instruction L is "2".

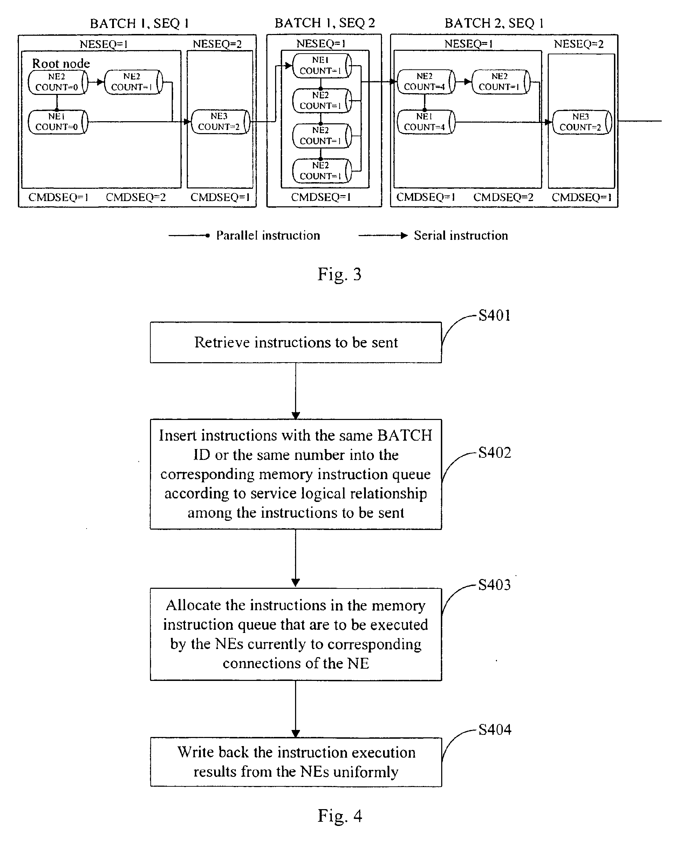

The data structure of above instructions is shown in the following table, and the corresponding binary tree structure for instructions is shown in Figure 3.

| BATCH ID | SEQ | NESEQ | NE | CMDSEQ | Instruction | Adjacent ction |
|---|---|---|---|---|---|---|
| BATCH 1 | 1 | 1 | NE 1 | 1 | Instruction A | None |
| | | | | 2 | Instruction B | Instruction A |
| | | 1 | NE 2 | 1 | Instruction C | None |
| | | 2 | NE 3 | 1 | Instruction D | Instruction B |
| | | | | | | Instruction C |
| | 2 | 1 | NE 1 | 1 | Instruction E | Instruction D |
| | | 1 | NE 2 | 1 | Instruction F | Instruction D |
| | | | | 1 | Instruction G | Instruction D |
| | | 1 | NE 3 | 1 | Instruction H | Instruction D |
| BATCH 2 | 1 | 1 | NE 2 | 1 | Instruction I | Instruction E |
| | | | | | | Instruction F |
| | | | | | | Instruction G |
| | | | | | | Instruction H |
| | | | | 2 | Instruction J | Instruction I |
| | | 1 | NE 1 | 1 | Instruction K | Instruction E |
| | | | | | | Instruction F |
| | | | | | | Instruction G |
| | | | | | | Instruction H |
| | | 1 | NE 3 | 1 | Instruction L | Instruction J |
| | | | | | | Instruction K |

In addition, in an embodiment of the present invention, different instructions have different priorities. Instructions with higher priorities are executed in precedence. However, for instructions having the same BATCH ID, the same IMSI or the same MSISDN, there is no priority order for execution among them, and the instructions may be executed in the time sequence among them.

Figure 4 is a flow chart illustrating the implementation of a method for executing service provisioning instruction according to an embodiment of the present invention, which is described in detail as follows.

In step S401, the instructions to be sent are retrieved.

In an embodiment of the present invention, the interaction interfaces between the NEs and the worksheet database or other data storage or recording entities, e.g., a work flow engine are unified, through which all instructions to be sent are retrieved from the worksheet database.

In step S402, instructions having the same dependency characteristic are inserted into the corresponding memory instruction queue, according to the service logical relationship among the instructions to be sent.

In an embodiment of the present invention, instructions having the same BATCH, the same IMSI or the same MSISDN are inserted into the corresponding memory instruction queue, according to the service logical relationship among the instructions, e.g., the relationships of dependency, roll-back, failure omitting, parallel processing, serial processing or interaction. The memory instruction queues are parallel to each other, while the instructions in a memory instruction queue are usually in serial relationship to each other.

In an embodiment of the present invention, the data structure of the instructions in a memory instruction queue is a meshed binary tree, which includes a binary tree of queue of ordinary instructions to be executed, a binary tree of queue of roll-back instructions, and a binary tree of queue of roll-back instructions to be executed. Each node in the tree has two successor nodes: a parallel instruction node and a serial instruction node.

When the instructions are inserted into the corresponding memory instruction queue, whether the corresponding memory instruction queue exists is determined according to the dependency characteristics of the instructions, such as BATCH ID, IMSI or MSISDN. If the corresponding memory instruction queue exists, the instructions are inserted into the memory instruction queue corresponding to the dependency characteristics of BATCH ID, IMSI or MSISDN of the instructions according to the service logical relationship among the instructions, and if the corresponding memory instruction queue does not exist, a new memory instruction queue is created. At the same time, the execution order of the instructions, i.e., the COUNT values of the instructions, is adjusted according to the execution of the instruction and the logical relationship among the instructions in the memory instruction queue.

In step S403, the instructions in the memory instruction queue that are to be executed by the NEs currently are allocated to corresponding connections of the NE.

In an embodiment of the present invention, the instructions in the memory instruction queues that are to be executed by the NEs currently may be allocated to corresponding connections of the NE in parallel mode, or in serial mode according to the priorities of the instructions.

In step S404, the instruction execution results from the NEs are written back to the worksheet database or to other data storage or recording entity, e.g., a work flow engine.

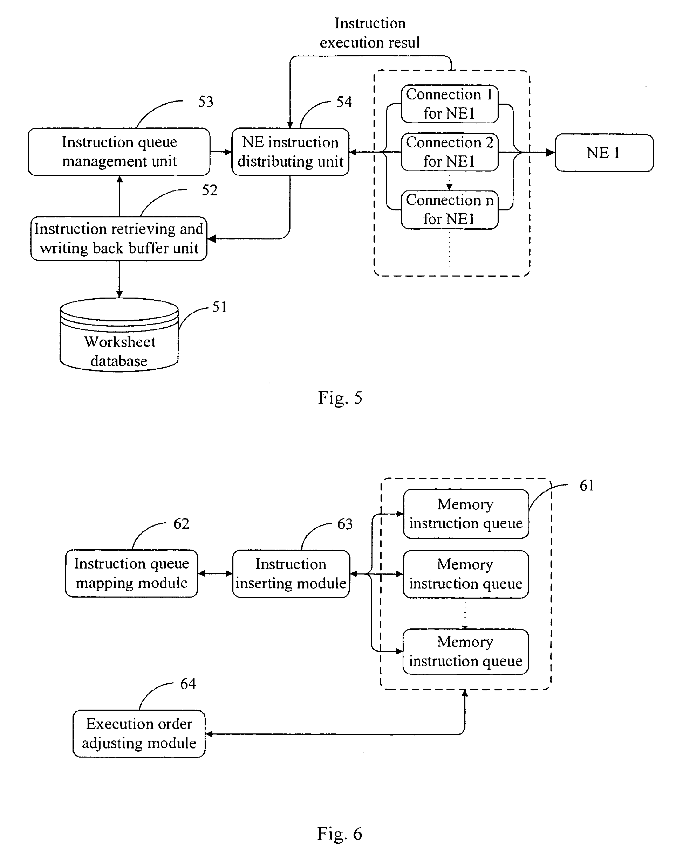

Figure 5 shows the structure of the service provisioning system according to an embodiment of the present invention. For the convenience of description, only the parts related to the present invention are shown in Figure 5.

The worksheet database 51 stores the information on all instructions to be sent and the execution results of the instructions written back to the worksheet database. The information on instructions contains BATCH ID of worksheet batch to which the instructions belong, SEQ of the worksheet in worksheet batch, NESEQ and CMDSEQ, and may contain instruction priority.

In an embodiment of the present invention, the worksheet database 51 may also be a unit independent of the service provisioning system. For example, the worksheet database 51 may be arranged in another network entity and is connected to the service provisioning system for communication. Alternatively, the worksheet database 51 may be other data storage or recording entity, e.g., a work flow engine.

The instruction retrieving and writing back buffer unit 52 is a unified interface for interaction between NEs and the worksheet database 51. The instruction retrieving and writing back buffer unit 52 retrieves all instructions to be sent from the worksheet database 51 in a certain time interval and writes back the execution results of all instructions to the worksheet database 51. In that way, the instructions stored in the worksheet database 51 may be loaded to the background in batch. In the process that the instruction retrieving and writing back buffer unit 52 retrieves the instructions in batch, the time interval for instruction retrieving, the number of instructions to be retrieved each time and the number of instructions that is allowed to be buffered in the memory may be configured, so as to avoid excessive occupation of memory resource due to the too long period for retrieving an instruction each time or too many instructions. The instruction retrieving and writing back buffer unit 52 retrieves instructions from the worksheet database 51 in the sequence of BATCH, SEQ, NESEQ, and CMDSEQ, and stores the instructions in the memory in BATCH sequence.

In order to further improve reading/writing performance of the system, the instruction retrieving and writing back buffer unit 52 may be implemented as a cache in an embodiment of the present invention.

After retrieving instructions from the worksheet database 51, the instruction retrieving and writing back buffer unit 52 sends all retrieved instructions to the instruction queue management unit 53. The instruction queue management unit 53 distributes centrally the instructions sent from the instruction retrieving and writing back buffer unit 52 to the corresponding memory instruction queues. In an embodiment of the present invention, the instruction retrieving and writing back buffer unit 52 retrieves instructions from the worksheet database 51 in the unit of BATCH, and the instruction queue management unit 53 also distributes the instructions in the unit of BATCH.

A memory instruction queue is a queue formed with all instructions having the same BATCH ID, the same IMSI or the same MSISDN. It should be noted that the memory instruction queues are not classed by BATCH strictly. A memory instruction queue may contain different batches of instructions, which have a common characteristic, i.e., any one of the BATCH ID, IMSI or MSISDN is identical, such as a queue of instructions having the same number (e.g., IMSI or MSISDN).

When distributing the instructions, the instruction queue management unit 53 allocates the instructions to corresponding instruction nodes according to the BATCH ID of worksheet batch, SEQ of worksheet in worksheet batch, NESEQ and CMDSEQ.

Instructions having the same dependency characteristic need to be sent in time sequence instead of in priority order, for example, an account is created first for the user; then the SMS, Color Ring Back Tone, CRBT service, and GPRS Service are provided; next, the account number is changed separately; after that, the card is changed; finally, the account is canceled. For such operations, corresponding instructions in the batches need to be executed strictly in time sequence. Therefore, all instructions that are associated with each other in certain serial execution relationship are stored in a memory instruction queue. It should be noted that different memory instruction queues are in parallel execution relationship to each other, and therefore instructions may be sent in parallel.

In an embodiment of the present invention, the data structure of the instructions in a memory instruction queue is a meshed binary tree. Different instructions may be managed via the corresponding binary trees of queue, including a binary tree of queue of ordinary instructions to be executed, a binary tree of queue of roll-back instructions, and a binary tree of queue of roll-back instructions to be executed. The binary tree of queue of ordinary instructions to be sent stores non-roll-back instructions in the memory instruction queue and these instructions are sent according to certain service logic. Whether to send part of these instructions needs to be judged according to the corresponding logic. For example, an instruction may be executed only when a service is determined as in closed state by querying with the previous query instruction. The binary tree of queue of roll-back instructions stores all roll-back instructions that are not to be executed temporarily. Normally, these instructions will not be executed, but in some special cases, they may be triggered. The binary tree of queue of roll-back instructions to be sent stores roll-back instructions to be sent. In the case that the execution result of an ordinary instruction triggers roll-back, the corresponding roll-back instruction in the queue of roll-back instructions is inserted into the queue of roll-back instructions to be sent and wait for sending.

When all instructions in the memory instruction queue have been executed, the instruction queue management unit 53 releases the memory and objects.

As shown in Figure 6, the instruction queue management unit 53 includes at least one memory instruction queue 61, and each memory instruction queue receives instructions having the same dependency characteristic. An instruction queue mapping module 62 stores information on mapping relationship between instruction batch or instruction ID and corresponding memory instruction queue. An instruction inserting module 63 searches for or creates corresponding memory instruction queues according to the mapping relationship between instruction batches or instruction IDs and the corresponding memory instruction queues, and inserts the instructions into respective memory instruction queues according to the service logical relationship among instructions. An execution order adjusting module 64 adjusts the COUNT values of instructions according to the execution of instructions in the instruction queue and the service logical relationship among the instructions, and thereby adjusts the execution order of the instructions.

An NE instruction distributing unit 54 allocates the instructions in the memory instruction queue that are to be executed by NEs to the corresponding connections of the NE. After the instructions are executed, the NE instruction distributing unit 54 writes back the execution results of instructions in NEs into the instruction retrieving and writing back buffer unit 52, and then the instruction retrieving and writing back buffer unit 52 writes back the results in parallel to the worksheet database 51.

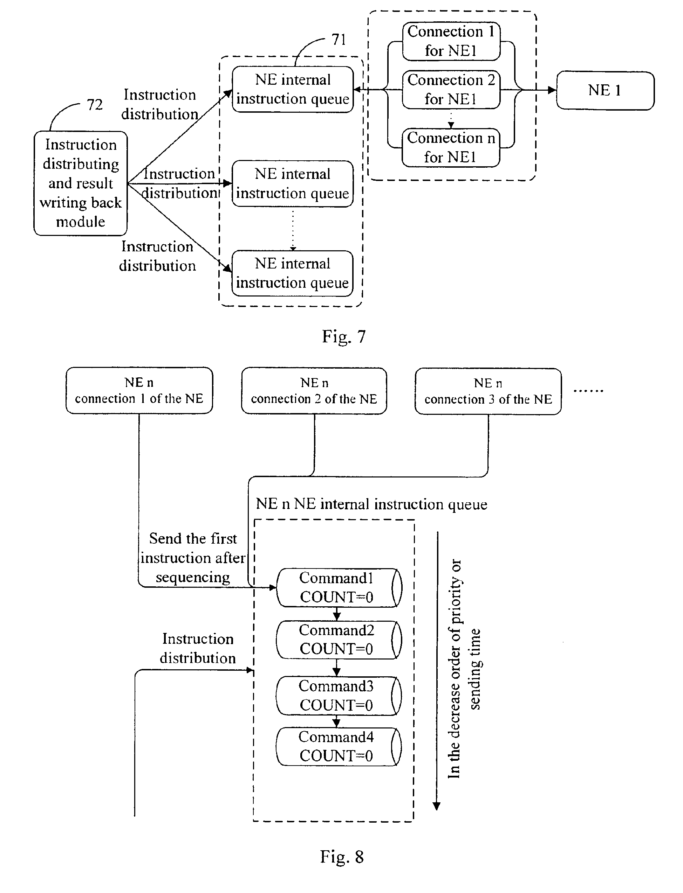

As shown in Figure 7, the NE instruction distributing unit 54 includes at least one NE internal instruction queue 71 adapted to receive instructions to be executed by the NE currently, i.e., instructions having COUNT=0. Each NE internal instruction queue is mapped to an NE, and each NE may have a plurality of connections of the NE. An instruction distributing and result writing back module 72 distributes the instructions in the memory instruction queue that are to be executed by the NE currently to the corresponding NE internal instruction queue 71. In addition, other instructions that meet the sending condition are allocated to the corresponding NE internal instruction queue according to the execution result of the current instruction.

In an embodiment of the present invention, the instructions in NE internal instruction queues 71 may be organized in parallel mode, in which no priority order among instructions, and the instructions in NE internal instruction queues 71 may also be organized in serial mode. As shown in Figure 8, the NE internal instruction queue 71 arranges the received instructions in the sequence of priority or sending time. In this way, instructions with higher priority are sent to connections of the NE in precedence. In the case that an NE has a plurality of connections of the NE, each connection of the NE retrieves, via the NE internal instruction queue 71, instructions that may be sent. As long as a connection is idle, the instructions are retrieved automatically from the NE internal instruction queue 71 for sending.

In conclusion, compared with the prior art, the present invention has the following advantages:

1. The interfaces to the worksheet database are unified, and thereby the occupation of worksheet database resource is reduced.

All interactions with the worksheet database are implemented via the instruction retrieving and writing back buffer unit centrally instead of separate interactions via connections of the NE. The use of unified interface may improve efficiency of interaction with the worksheet database, reduce occupation of worksheet database resource and ensure performance of the worksheet database.

2. Quick forwarding is implemented via the memory instruction queues, which improves the instruction processing efficacy.

All instructions are retrieved centrally via the instruction retrieving and writing back buffer unit into the memory to form the memory instruction queues, so as to accomplish unified distribution and back writing of all instructions and unified processing of service logics. This approach may greatly increase instruction forwarding speed and improve instruction processing efficacy.

3. Various complex service logics are supported.

By distributing instructions uniformly, processing various serial and parallel instruction logics by means of memory instruction queues, triggering various complex transaction processing logics including dependency, interaction, condition, roll-back according to the instruction execution result, and by extending the service logic of distribution of worksheet instructions in batch and back-writing of execution result continuously, more complex service processing logics may be supported.

4. Concurrent task processing performance is enhanced.

In the prior art, the retrieving of an instruction and the writing back of the execution result to the worksheet database need to be implemented strictly in sequence before another instruction may be sent. In an embodiment of the present invention, another instruction may be sent immediately once an instruction has been retrieved and the execution result has been written back to the memory, instead of waiting for strict implementing of writing back of the execution result to the worksheet database. The instruction execution results may be written back to the worksheet database in concurrent mode with multithreading technique and concurrent back writing may improve concurrent task processing performance.

The instructions in different memory instruction queues are executed concurrently. That feature, together with the characteristic of flexible increasing/decreasing of multiple connections with an NE, has stronger concurrent processing capability and more flexible concurrent multiple connections configuration capability, so that the instructions may be processed more quickly. By means of the multiple connections with an NE, instructions may be retrieved from the instruction queues in the NE, and thereby the instruction forwarding may be implemented quickly.

5. Requirement for hardware performance is reduced.

In an embodiment of the present invention, the interactions with the worksheet database are reduced significantly, and the Input/Output, I/O operations are reduced greatly; in addition, more calculations are carried out in the memory and handled by the CPU directly; therefore, the requirement for hardware performance is reduced.

6. The efficiency of load-sharing among multiple connections of the NE is improved.

In an embodiment of the present invention, the number of connections with an NE may be determined arbitrarily, and the instructions in NEs are processed concurrently in a load-sharing manner; therefore, the phenomenon that an connection of the NE is in idle state while another connection of the NE is busy may be eliminated. In addition, the instructions may be retrieved and the execution results may be written back quickly. The capability of connections of the NE is fully utilized.

## Claims

1. A method for executing service provisioning instructions, comprising:
retrieving at least two instructions to be sent;
inserting the instructions having the same dependency characteristic into a corresponding memory instruction queue according to the service logic relationship among the instructions; and
allocating an instruction to be executed currently by a Network Element, NE, in the memory instruction queue to the corresponding connection of the NE.

2. The method according to claim 1, wherein the process of inserting instructions having the same dependency characteristic into the corresponding memory instruction queue according to the service logical relationship among the instructions comprises:
searching for or creating the corresponding memory instruction queue according to the dependency characteristic of the instructions; and
inserting the instructions to be sent into the memory instruction queue corresponding to the dependency characteristic of the instructions according to the service logical relationship among the instructions.

3. The method according to claim 2, wherein the process of inserting instructions having the same dependency characteristic into the corresponding memory instruction queue according to the service logical relationship among the instructions further comprises:
adjusting the execution order of the instructions to be sent according to the execution of the instructions in the memory instruction queue and the service logical relationship among the instructions.

4. The method according to claim 1, 2 or 3, wherein a data structure of instructions in the memory instruction queue is a meshed binary tree, and each node in the tree has two successor nodes: a parallel instruction node and a serial instruction node.

5. The method according to one of the claims 1 to 5, wherein the meshed binary tree comprises a binary tree of queue of ordinary instructions to be executed, a binary tree of queue of roll-back instructions and a binary tree of queue of roll-back instructions to be executed.

6. The method according to claim 1, wherein the instructions to be executed by NEs currently in the memory instruction queue are allocated to the corresponding connections of the NE in parallel mode, or allocated to the corresponding connections of the NE in serial mode according to priorities of instructions.

7. The method according to any of claims 1-6, wherein the dependency characteristic is worksheet BATCH ID, or International Mobile Subscriber Identification Number, IMSN, or Mobile Station International ISDN, MSISDN.

8. The method according to any of claims 1-7, further comprising: writing back the execution result of the instructions from the current connection of the NE.

9. A service provisioning device comprising:
an instruction retrieving and writing back buffer unit adapted to retrieve at least two instructions to be sent;
an instruction queue management unit adapted to insert instructions having the same dependency characteristic into a corresponding memory instruction queue, according to the service logical relationship among instructions; and
an Network Element, NE, instruction distributing unit adapted to allocate the instruction to be executed currently by an NE in the memory instruction queue to the corresponding connection of the NE.

10. The device according to claim 9, wherein the instruction queue management unit comprises:
at least a memory instruction queue adapted to receive instructions having the same dependency characteristic;
an instruction queue mapping module adapted to store information on mapping relationship between instruction dependency characteristic and corresponding memory instruction queue; and
an instruction inserting module adapted to search for or create corresponding memory instruction queues according to the mapping relationship between instruction dependency characteristics and corresponding memory instruction queues, and to insert the instructions to respective memory instruction queues according to the service logical relationship among the instructions.

11. The device according to claim 10, wherein the instruction queue management unit further comprises: an execution order adjusting module adapted to adjust the execution order of the instructions according to the execution of the instructions in the memory instruction queue and the service logical relationship among the instructions.

12. The device according to claim 9, 10 or 11, wherein a data structure of instructions in the memory instruction queue is a meshed binary tree, and each node in the tree has two successor nodes: a parallel instruction node and a serial instruction node.

13. The device according to one of the claims 9 to 12, wherein the NE instruction distributing unit comprises:
at least one NE internal instruction queue adapted to receive the instructions to be executed by the corresponding NE currently; and
an instruction distributing and result writing back module adapted to distribute the instructions in the memory instruction queue that are to be executed by the NE currently to the corresponding NE internal instruction queue, and to write back the instruction execution result from the connection of the NE to the instruction retrieving and writing back buffer unit; wherein
the instruction retrieving and writing back buffer unit is further adapted to write back the instruction execution result from the current connection of the NE.

14. The device according to one of the claims 9 to 13, wherein the instructions in the NE internal instruction queues are organized in parallel mode, or organized in serial mode according to the priorities of the instructions.

15. A service provisioning system comprising:
a worksheet database adapted to store instructions to be sent;
and the service provisioning instruction execution device according to any of the claims 9-14.

## Patentansprüche

1. Verfahren zum Ausführen von Dienstbereitstellungsanweisungen, mit den folgenden Schritten:
Abrufen von mindestens zwei zu sendenden Anweisungen;
Einfügen der Anweisungen, die dieselbe Abhängigkeitseigenschaft aufweisen, in eine entsprechende Speicheranweisungswarteschlange gemäß der Dienstlogik-Beziehung zwischen den Anweisungen; und
Vergeben einer aktuell durch ein Netzelement NE auszuführenden Anweisung in der Speicheranweisungswarteschlange an die entsprechende Verbindung des NE.

2. Verfahren nach Anspruch 1, wobei der Prozess des Einfügens von Anweisungen, die dieselbe Abhängigkeitseigenschaft aufweisen, in die entsprechende Speicheranweisungswarteschlange gemäß der Dienstlogik-Beziehung zwischen den Anweisungen Folgendes umfasst:
Suchen nach oder Erzeugen der entsprechenden Speicheranweisungswarteschlange gemäß der Abhängigkeitseigenschaft der Anweisungen; und
Einfügen der in die Speicheranweisungswarteschlange, die der Abhängigkeitseigenschaft der Anweisungen entspricht, zu sendenden Anweisungen gemäß der Dienstlogik-Beziehung zwischen den Anweisungen.

3. Verfahren nach Anspruch 2, wobei der Prozess des Einfügens von Anweisungen, die dieselbe Abhängigkeitseigenschaft aufweisen, in die entsprechende Speicheranweisungswarteschlange gemäß der Dienstlogik-Beziehung zwischen den Anweisungen ferner Folgendes umfasst:
Justieren der Ausführungsreihenfolge der zu sendenden Anweisungen gemäß der Ausführung der Anweisungen in der Speicheranweisungswarteschlange und der Dienstlogik-Beziehung zwischen den Anweisungen.

4. Verfahren nach Anspruch 1, 2 oder 3, wobei eine Datenstruktur von Anweisungen in der Speicheranweisungswarteschlange ein vermaschter Binärbaum ist und jeder Knoten in dem Baum zwei Nachfolgerknoten aufweist: einen Parallelanweisungsknoten und einen Seriellanweisungsknoten.

5. Verfahren nach einem der Ansprüche 1 bis 5, wobei der vermaschte Binärbaum einen Binärbaum der Warteschlange gewöhnlicher auszuführende Anweisungen, einen Binärbaum der Warteschlage von Roll-Back-Anweisungen und einen Binärbaum der Warteschlange von auszuführenden Roll-Back-Anweisungen umfasst.

6. Verfahren nach Anspruch 1, wobei die sich aktuell in der Speicheranweisungswarteschlange befindenden, durch NE auszuführenden Anweisungen gemäß Prioritäten von Anweisungen im Parallelmodus an die entsprechenden Verbindungen des NE vergeben werden oder im Seriellmodus an die entsprechenden Verbindungen des NE vergeben werden.

7. Verfahren nach einem der Ansprüche 1-6, wobei die Abhängigkeitseigenschaft Worksheet BATCH ID oder International Mobile Subscriber Identification Number IMSN oder Mobile Station International ISDN, MSISDN ist.

8. Verfahren nach einem der Ansprüche 1-7, ferner mit dem folgenden Schritt:
Zurückschreiben des Ausführungsergebnisses der Anweisungen aus der aktuellen Verbindung des NE.

9. Dienstbereitstellungseinrichtung, umfassend:
eine Anweisungsabruf und Rückschreibpuffereinheit, die dafür ausgelegt ist, mindestens zwei zu sendende Anweisungen abzurufen;
eine Anweisungswarteschlangen-Verwaltungseinheit, die dafür ausgelegt ist, gemäß der Dienstlogik-Beziehung zwischen Anweisungen, Anweisungen, die dieselbe Abhängigkeitseigenschaft aufweisen, in eine entsprechende Speicheranweisungswarteschlange einzufügen; und
eine Verteilungseinheit für Anweisungen von Netzelementen NE, die dafür ausgelegt ist, die aktuell durch ein NE auszuführenden Anweisungen in der Speicheranweisungswarteschlange an die entsprechende Verbindung des NE zu vergeben.

10. Einrichtung nach Anspruch 9, wobei die Anweisungswarteschlangen-Verwaltungseinheit Folgendes umfasst:
mindestens eine Speicheranweisungswarteschlange, die dafür ausgelegt ist, Anweisungen zu empfangen, die dieselbe Abhängigkeitseigenschaft aufweisen;
ein Anweisungswarteschlangen-Abbildungsmodul, das dafür ausgelegt ist, Informationen über die Abbildungsbeziehung zwischen Anweisungsabhängigkeitseigenschaft und entsprechender Speicheranweisungswarteschlange zu speichern, und
ein Anweisungseinfügemodul, das dafür ausgelegt ist, gemäß der Abbildungsbeziehung zwischen Anweisungsabhängigkeitseigenschaft und entsprechenden Speicheranweisungswarteschlangen entsprechende Speicheranweisungswarteschlangen zu suchen oder zu erzeugen und die Anweisungen gemäß der Dienstlogik-Beziehung zwischen den Anweisungen in jeweilige Speicheranweisungswarteschlangen einzufügen.

11. Einrichtung nach Anspruch 10, wobei die Anweisungswarteschlangen-Verwaltungseinheit ferner Folgendes umfasst: ein Ausfiihrungsreihenfolge-Justiermodul, das dafür ausgelegt ist, die Ausführungsreihenfolge der Anweisungen gemäß der Ausführung der Anweisungen in der Speicheranweisungswarteschlange und der Dienstlogik-Beziehung zwischen den Anweisungen zu justieren.

12. Einrichtung nach Anspruch 9, 10 oder 11, wobei eine Datenstruktur von Anweisungen in der Speicheranweisungswarteschlange ein vermaschter Binärbaum ist und jeder Knoten in dem Baum zwei Nachfolgerknoten aufweist: einen Parallelanweisungsknoten und einen Seriellanweisungsknoten.

13. Einrichtung nach einem der Ansprüche 9 bis 12, wobei die NE-Anweisungsverteilungseinheit Folgendes umfasst:
mindestens eine NE-Intern-Anweisungswarteschlange, die dafür ausgelegt ist, die aktuell durch das entsprechende NE auszuführenden Anweisungen zu empfangen;
und
ein Anweisungsverteilungs- und Ergebnisrückschreibmodul, das dafür ausgelegt ist, die Anweisungen in der Speicheranweisungswarteschlange, die aktuell durch das NE auszuführen sind, an die entsprechende NE-Intern-Anweisungswarteschlange zu verteilen und das Anweisungsausführungsergebnis aus der Verbindung des NE in die Anweisungsabruf- und Rückschreibpuffereinheit zurückzuschreiben; wobei die Anweisungsabruf- und Rückschreibpuffereinheit ferner dafür ausgelegt ist, das Anweisungsausführungsergebnis aus der aktuellen Verbindung des NE zurückzuschreiben.

14. Einrichtung nach einem der Ansprüche 9 bis 13, wobei die Anweisungen in den NE-Intem-Anweisungswarteschlangen gemäß den Prioritäten der Anweisungen im Parallelmodus organisiert sind oder im Seriellmodus organisiert sind.

15. Dienstbereitstellungssystem, umfassend:
eine Worksheet-Datenbank, die dafür ausgelegt ist, zu sendende Anweisungen zu speichern;
und die Dienstbereitstellungsanweisungsausführungseinrichtung nach einem der Ansprüche 9-14.

## Revendications

1. Procédé d'exécution d'instructions de fourniture de services, comprenant :
la récupération d'au moins deux instructions à envoyer,
l'insertion des instructions possédant la même caractéristique de dépendance dans une file d'attente d'instructions de mémoire correspondante en fonction de la relation de logique de service entre les instructions, et
l'attribution d'une instruction à exécuter actuellement par un élément de réseau, NE, de la file d'attente d'instructions de mémoire à la connexion correspondante du NE.

2. Procédé selon la revendication 1, où le processus d'insertion d'instructions possédant la même caractéristique de dépendance dans la file d'attente d'instructions de mémoire correspondante en fonction de la relation logique de service entre les instructions comprend :
la recherche ou la création de la file d'attente d'instructions de mémoire correspondante en fonction de la caractéristique de dépendance des instructions, et
l'insertion des instructions à envoyer dans la file d'attente d'instructions de mémoire correspondant à la caractéristique de dépendance des instructions en fonction de la relation logique de service entre les instructions.

3. Procédé selon la revendication 2, où le processus d'insertion d'instructions possédant la même caractéristique de dépendance dans la file d'attente d'instructions de mémoire correspondante en fonction de la relation logique de service entre les instructions comprend en outre :
l'ajustement de l'ordre d'exécution des instructions à envoyer en fonction de l'exécution des instructions de la file d'attente d'instructions de mémoire et de la relation logique de service entre les instructions.

4. Procédé selon la revendication 1, 2 ou 3, où une structure de données d'instructions de la file d'attente d'instructions de mémoire est un arbre binaire maillé, et chaque noeud de l'arbre possède deux noeuds successeurs : un noeud d'instruction en parallèle et un noeud d'instruction en série.

5. Procédé selon l'une quelconque des revendications 1 à 5, où l'arbre binaire maillé comprend un arbre binaire de file d'attente d'instructions ordinaires à exécuter, un arbre binaire de file d'attente d'instructions de répétition et un arbre binaire de file d'attente d'instructions de répétition à exécuter.

6. Procédé selon la revendication 1, où les instructions à exécuter par des NE actuellement dans la file d'attente d'instructions de mémoire sont attribuées aux connexions correspondantes du NE en mode parallèle ou attribuées aux connexions correspondantes du NE en mode série en fonction de priorités d'instructions.

7. Procédé selon l'une quelconque des revendications 1 à 6, où la caractéristique de dépendance est une feuille de programmation BATCH ID ou un Numéro international d'identification d'abonné mobile, IMSN, ou un numéro ISDN international de station mobile, MSISDN.

8. Procédé selon l'une quelconque des revendications 1 à 7, comprenant en outre : la réécriture du résultat d'exécution des instructions à partir de la connexion actuelle du NE.

9. Dispositif de fourniture de services comprenant :
une unité de mémoire tampon de récupération et de réécriture d'instructions adaptée de façon à récupérer au moins deux instructions à envoyer,
une unité de gestion de file d'attente d'instructions adaptée de façon à insérer des instructions possédant la même caractéristique de dépendance dans une file d'attente d'instructions de mémoire correspondante, en fonction de la relation logique de service entre les instructions, et
une unité de distribution d'instructions d'élément de réseau, NE, adaptée de façon à attribuer l'instruction à exécuter actuellement par un NE de la file d'attente d'instructions de mémoire à la connexion correspondante du NE.

10. Dispositif selon la revendication 9, où l'unité de gestion de file d'attente d'instructions comprend :
au moins une file d'attente d'instructions de mémoire adaptée de façon recevoir des instructions possédant la même caractéristique de dépendance,
un module de mappage de file d'attente d'instructions adapté de façon à conserver en mémoire des informations relatives à une relation de mappage entre une caractéristique de dépendance d'instruction et la file d'attente d'instructions de mémoire correspondante, et
un module d'insertion d'instructions adapté de façon à rechercher ou à créer des files d'attente d'instructions de mémoire correspondantes en fonction de la relation de mappage entre une caractéristique de dépendance d'instructions et des files d'attente d'instructions de mémoire correspondantes, et à insérer les instructions dans des files d'attente d'instructions de mémoire respectives en fonction de la relation logique de service entre les instructions.

11. Dispositif selon la revendication 10, où l'unité de gestion de file d'attente d'instructions comprend en outre : un module d'ajustement de l'ordre d'exécution adapté de façon à ajuster l'ordre d'exécution des instructions en fonction de l'exécution des instructions de la file d'attente d'instructions de mémoire et de la relation logique de service entre les instructions.

12. Dispositif selon la revendication 9, 10 ou 11 où une structure de données d'instructions de la file d'attente d'instructions de mémoire est un arbre binaire maillé et chaque noeud de l'arbre possède deux noeuds successeurs : un noeud d'instruction en parallèle et un noeud d'instruction en série.

13. Dispositif selon l'une quelconque des revendications 9 à 12, où l'unité de distribution d'instructions de NE comprend :
au moins une file d'attente d'instructions interne au NE adaptée de façon à recevoir les instructions à exécuter actuellement par le NE correspondant, et
un module de réécriture de résultats et de distribution d'instructions adapté de façon à distribuer les instructions de la file d'attente d'instructions de mémoire qui sont à exécuter actuellement par le NE à la file d'attente d'instructions interne au NE correspondante, et à réécrire le résultat d'exécution d'instructions de la connexion du NE à l'unité de mémoire tampon de récupération et de réécriture d'instructions, où l'unité de mémoire tampon de récupération et de réécriture d'instructions est en outre adaptée de façon à réécrire le résultat d'exécution d'instructions à partir de la connexion actuelle du NE.

14. Dispositif selon l'une quelconque des revendications 9 à 13, où les instructions dans les files d'attente d'instructions internes au NE sont organisées en mode parallèle ou sont organisées en mode série en fonction des priorités des instructions.

15. Système de fourniture de services comprenant :
une base de données de feuilles de programmation adaptée de façon à conserver en mémoire des instructions à envoyer,
et le dispositif d'exécution d'instructions de fourniture de services selon l'une quelconque des revendications 9 à 14.
